(19)

Europäisches Patentamt

European Patent Office

Office européen des brevets

(11) **EP 2 625 965 A1**

(12) **EUROPEAN PATENT APPLICATION**

(43) Date of publication:
**14.08.2013 Bulletin 2013/33**

(51) Int Cl.:
*A23G 9/48* (2006.01)     *A23G 9/44* (2006.01)

(21) Application number: **12154801.0**

(22) Date of filing: **09.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nestec S.A.**
**1800 Vevey (CH)**

(72) Inventors:
• **Ricco, Massimiliano**
**43123 Parma (IT)**
• **Kolodziejczyk, Eric**
**1800 Vevey (CH)**

(54) **Ice-containing products**

(57)     An ice-containing product obtained by mixing two distinct phases comprising ice particles of different sizes is described. The product has improved organoleptic properties like texture and perception for the consumer. A process for preparing these ice-containing product is also described.

EP 2 625 965 A1

**Description**

**Field of the invention**

The invention relates to ice-containing products which are characterized by being obtainable by mixing two distinct phases, which leads to improved product characteristics like texture and perception for the consumer. Further, the invention relates to a process for preparing these ice-containing products.

**Background of the invention**

Ice-containing products having a bimodal ice particle distribution and processes for preparation thereof have been described by the prior art.

US 4,988,529 discloses a milk shake product prepared from a special kind of ice cream comprising countless tiny pieces of ice in a size range of from 1 to 10mm, which product is spoonable after frozen storage and beating. Ice pieces are obtained in the desired size range by crushing larger blocks of ice. They are admixed to an ice cream mix by the use of a fruit feeder.

US 4,031,262 discloses a method for manufacturing ice cream containing ice granules of preferably from 5 to 10mm in size, which were made by breaking ice blocks into pieces with a hammer or the like, followed by mixing them with half-frozen ice cream.

EP 1 051 913 discloses a cold confectionary having fine ice fragments, such that the cold confectionary has a homogeneous and smooth texture and taste and also includes a sufficient amount of ice fragments apparently sensible in the mouth for providing a rich cold and cool feeling. The fine ice particles are prepared by the use of a continuous type fine pulverizing equipment with a cutting head.

EP 1 778 023 disclose ice-containing products with inclusions, which have a particular bimodal frozen particle distribution providing softness and spoonability/ scoopability of the product when taken straight from the freezer at -18°C. The process used to make such products involves manipulating the ice phase by substituting some of the ice present in the final product with frozen particles in the size range of greater than 1mm and less than 5mm. Such large particles are again obtained by mechanically reducing the size of frozen particles, at least 90% of which have a particle size of greater than 5mm, by a crushing pump.

In each of the above prior art products, a bimodal ice particle distribution is obtained by mixing frozen particles having a desired size in the mm range to a frozen confectionary mix. However, the particle size of those ice particles that are contained a priori in the frozen confectionary mix is poorly controlled and therefore hardly homogenous.

Moreover, preparing ice particles in the mm size range by the use of grinding devices as described in the above documents goes along with severe disadvantages regarding texture and taste of the final product. Due to the release of thermal energy during the grinding process of larger ice blocks, surphase melting of the resulting smaller particles occurs, which finally leads to agglomeration and re-freezing of said grinded particles. This agglomeration is further enhanced by the production of very fine ice residues during the grinding process, which residues deposit between the larger grinded ice particles and, by melting and re-freezing, stick those larger particles together like a glue. The resulting large agglomerations are clearly sensible during consumption of the product and lead to an unpleasantly cold feeling in the mouth. Moreover, such frozen particle agglomerations are no more consumable by a straw. As a further drawback, the grinded ice particles exhibit a rather uneven and rough shape with a sharp angled surphase structure, leading to further agglomeration and a lack of smooth feeling on the tongue.

Said rough particle structure together with the lack of a homogenous particle size distribution in both particle populations leads to spoiling of the final product with regard to its texture and taste.

**Summary of the invention**

Therefore, the present inventors have developed a novel ice-containing product, which is characterized by the coexistence of two distinct phases. Each of these phases comprises ice particles having a very homogeneous and narrow particle size distribution.

The process used to make such novel products involves growing the ice particles comprised in the two phases from a nucleation solution and combining both phases in a particular weight ratio. The resulting biphasic product leads to an improved texture and perception for the consumer. A particularly smooth and refreshing taste is achieved. Moreover, said product provides an improved spoonability and/or scoopability when taking straight from the freezer at -18°C. It is faster re-conditionable and easy to consume with a straw directly from the beginning. Moreover the process of growing ice particles to a desired size range instead of pulverizing large blocks of ice to obtain such ice particles allows for a more hygienic production and a more homogeneous particle size distribution in the end product.

Accordingly, in a first aspect, the present invention provides an aerated ice-containing product, which is obtainable by mixing in a weight ratio of from 3:7 to 1:1, and preferably of 3:2: a.) a phase A comprising ice particles having frozen confection ingredients comprising at least 1, preferably at least 5 %weight milk-solids-non-fat (in the following referred to as "MSNF") and at least 1, preferably at least 3 %weight fat, and having at -18°C a mean particle size of $30\mu m$ to $60\mu m$, preferably $40\mu m$ to $50\mu m$, and b.) a phase B comprising ice particles, which are grown from an aqueous sugar solution comprising less than 1%weight MSNF and less than 1%weight fat, and having at -18°C a mean particle size of between $100\mu m$ and $400\mu m$, preferably $150\mu m$ and $300\mu m$.

An embodiment of the present invention refers to the aerated ice-containing product according to the first aspect, wherein after mixing phase A and phase B, the product is processed such that at least 80% of the ice particles of phase A are larger than $20\mu m$ and smaller than $250\mu m$, preferably larger than $40\mu m$ and smaller than $150\mu m$, and more preferably have a mean particle size of about $100\mu m$.

Another embodiment refers to the aerated ice-containing product according to the first aspect, wherein after mixing phase A and phase B, the product is processed such that at least 80% of the ice particles of phase B are larger than $200\mu m$ and smaller than 1mm, preferably smaller than $800\mu m$, and more preferably have a mean particle size of about $300\mu m$.

In a second aspect, the invention provides an aerated ice-containing product, comprising at least:

- a phase A comprising ice particles having frozen confection ingredients comprising at least 1, preferably at least 5 %weight MSNF and at least 1, preferably at least 3 %weight fat, wherein at least 80% of the ice particles of phase A are larger than $20\mu m$ and smaller than $250\mu m$, preferably larger than $40\mu m$ and smaller than $150\mu m$, and more preferably have a mean particle size of about $100\mu m$, and
- a phase B comprising ice particles, which are grown from an aqueous sugar solution comprising less than 1%weight MSNF and less than 1%weight fat, wherein at least 80% of the ice particles of phase B are larger than $200\mu m$ and smaller than 1mm, preferably smaller than $800\mu m$, and more preferably have a mean particle size of about $300\mu m$.

In an embodiment of the first and/or second aspect of the invention, at least 80%, preferably at least 90%, more preferably at least 95% and most preferably at least 99% of the ice particles in phase A of the aerated ice-containing product are larger than $60\mu m$.

In another embodiment of the first and/or second aspect of the invention, at least 80%, preferably at least 90%, more preferably at least 95% and most preferably at least 99% of the ice particles in phase B of the aerated ice-containing product are larger than $225\mu m$.

The invention also relates to an aerated ice-containing product according to the first and/or second aspect, wherein the ratio of the mean ice particle size in phase A to the mean ice particle size of phase B is from about 1:10 to about 1:1, and preferably from about 1:7 to 1:3.

In a preferred embodiment of the present invention, the aerated ice-containing product according to the first and/or second aspect has an overrun of from 20% to 60%, preferably of from 30% to 40%.

In a particularly preferred embodiment of the first and/or second aspect of the invention, the ice particles in phase A and/or in phase B are generated by crystal growth from a nucleation source. It is preferred that the nucleation source is an aqueous sugar solution such as aqueous sucrose solution.

It is further preferred that at least 80%, preferably at least 90%, more preferably at least 95% and most preferably at least 99% the ice particles in phase A and/or in phase B of the aerated ice-containing product according to the first and/or second aspect of the invention exhibit a spheroid and/or ellipsoidal shape. Moreover, it is preferred that the ice particles in phase B exhibit an ellipsoidal shape and have a flat and/or perforated appearance when visualized under the microscope.

Another embodiment relates to the aerated ice-containing product of the invention, wherein phase B is homogenously dispersed in a continuous phase A.

In a particularly preferred embodiment of the aerated ice-containing product according to the first and/or second aspect of the invention, phase A is composed of a frozen confectionary composition such as ice cream, mellorine, ice milk, milk shake, frozen custard, frozen yogurt, sherbet. It is mostly preferred that phase A is an ice cream composition.

Moreover, it is preferred that phase A of the inventive product has an overrun of from 35 to 55%.

In a further particularly preferred embodiment of the aerated ice-containing product according to the first and/or second aspect of the invention, phase B is composed of a slush ice composition comprising from 80 to 95% water and from 5 to 20% sugar.

Inventive products according to the above aspects have the advantage that due to the homogeneous particle size distribution in phase A and B, the perception in the mouth is very smooth and creamy without any coarse or rough feeling, while such products still offer a very fresh and refreshing taste.

In a third aspect, the present invention provides a process for preparing a product, preferably a product according to any of the preceding aspects of the invention, comprising the steps of

(i) preparing phase B by a process involving the following steps:

    a. preparing an ingredient mix comprising water and sugar,
    b. cooling the mix, preferably to a temperature of from about 0°C to about +10°C, more preferably to about +4°C,
    c. storing the mix in aging tank, preferably for about 4 to about 72h,
    d. pre-cooling the mix, preferably at a temperature comprised between about 0°C and about 2°C,
    e. freezing the mix, preferably until it reaches a temperature of from about -0,5°C to about -4°C.

(ii) preparing phase A by a process involving the following steps:

    a. preparing an frozen confection mix for phase A,
    b. cooling the mix, preferably to a temperature of from 0°C to +10°C, more preferably to +4°C
    c. storing the mix in an aging tank, preferably for about 4 to about 72h,
    d. freezing the mix, preferably at about -0,5°C to about -2°C, more preferably providing an overrun of from about 35 - 55%.

(iii) admixing phase A into phase B,
(iv) gently stirring the mixture, preferably at controlled temperature and overrun,
(v) pumping the obtained product in a buffer tank
(vi) refrigerating and stirring the product, preferably under slight overpressure,
(vii) filling product in a container, preferably using a volumetric displacement system,
(viii) hardening the product, preferably in a tunnel, more preferably at about -45°C
(ix) storing the product, preferably at a core temperature of about -18°C.

A preferred embodiment refers to the process according to the third aspect of the invention, wherein phase B is a slush ice composition comprising from 80 to 95% water and from 5 to 20% sugar and phase A is an ice cream composition.

In a fourth aspect, the present invention refers to the use of slush-ice particles, which are grown from a sugar solution, for the production of an aerated frozen dessert, by mixing it with ice cream particles which a smaller mean particle size than the slush-ice particles.

All the aforementioned aspects of the invention provide the advantage that ice particles that are grown in phase A and phase B exhibit a smooth and homogeneous surface due to their spheroid and/or ellipsoid shape. This particle texture further improves the smooth and soft feeling of the final product in the mouth of the consumer, when compared to prior art compositions comprising coarse and rough ice crystals due to their production by mechanical fragmentation of larger ice blocks.

Tests and definitions

Unless defined otherwise, all technical and scientific terms used herein have the same meaning as commonly understood by one of ordinary skill in the art. Definitions and descriptions of various terms or techniques used in frozen confectionary manufacture are found in Ice Cream, fifth edition, Robert T. Marshall & W.S. Arbuckle (1996, 2000) Aspen Publishers, Inc., Gaithersburg, Maryland.

Unless otherwise indicated, all numbers in the description and the claims are to be understood as modified by the term "about".

**Overrun**

The ice-containing products according to the present invention typically are aerated products. The term "aerated" means that gas has been intentionally incorporated into the product, such as by mechanical means. Any food grade gas can be used, such as air, nitrogen or carbon dioxide. The extent of aeration is typically defined in terms of "overrun". In the context of the present invention, percent overrun is defined in volume terms (measured at atmospheric pressure) as:

```
[(Volume of frozen aerated product - Volume of premix at

ambient temperature) / Volume of premix at ambient

temperature] x 100.
```

The amount of overrun present in the product will vary depending on the desired product characteristics. For example, the level of overrun in ice cream is typically from about 20 to 100%, whereas the overrun in water ice is typically less than 20%.

**Continuous phase**

In the context of the present invention, the term "continuous phase" is to be understood as being that phase in the heterogeneous system of phases A and B, in which the other phase is homogenously distributed, comparable to the dispersion medium in a liquid suspension or a solvent in a dilution.

**Nucleation source**

Nucleation is to be understood as being the initial process that occurs in the formation of an ice crystal from a liquid or semi-solid medium, in which a small number of ions, atoms, or molecules become arranged in a pattern characteristic of an ice crystal, forming a site upon which additional particles are deposited as the ice crystal grows. Such medium is referred to as being a nucleation source in the present application.

Ice crystal sizing and phase distribution

Particle sizes as referred to in the present application are determined by macroscopic and microscopic imaging and calculation of the equivalent circular diameter derived from the area of each particle, which method is generally known to the skilled person (see Ice Cream, fifth edition, Robert T. Marshall & W.S. Arbuckle (1996, 2000) Aspen Publishers, Inc., Gaithersburg, Maryland, page 265).

Mean particle sizes are preferably determined by identifying the size of at least 500 particles and averaging by number.

1. Macroscopy

The size and distribution of ice particles initiating from phase B ("slush component") was imaged by macroscopy on hand-made sections of phase B and of the final product.

1.1 Sample preparation

All steps of sample preparation are carried out in a freezer at -18°C using instruments that have been equilibrated at this temperature for at least 10 hours prior to their use.

A section of phase B or of the final aerated ice-containing product is laid onto a 41x76x1 mm glass slide and covered with a second glass slide of the same size. A 1kg weight is used to gently spread the product. Then, the product is dislocated by manual shear, followed by a dissociation of the two glass slides, which leads to the formation of ice cream smears and further separation of the ice particles.

1.2 Imaging

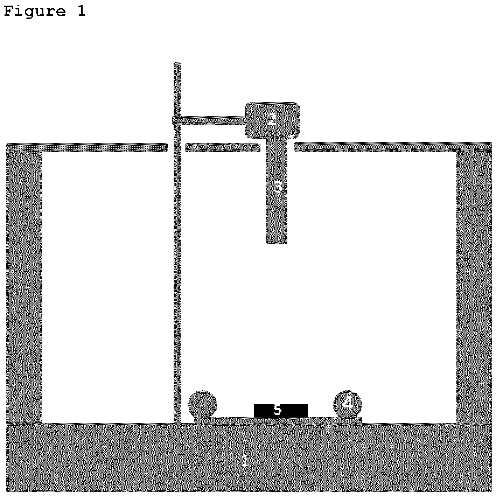

Macroscopy investigations are carried out at -18°C or - 10°C in a freezer. The macroscopic imaging setup is displayed in Figure 1.

Specimens are illuminated by an Osram L22W/840C ring lamp insuring a homogeneous lateral illumination of the samples. Images are taken using an infinity 2-C camera (Lumenera, USA) equipped with an objective Zoom 7000, (Navitar, Japan) at about x30 magnification and are processed using an image analysis software based on the IO image object toolbox (Synoptics, UK).

2. Microscopy

The size and distribution of ice particles initiating from phase A was imaged by microscopy in phase A separately as well as in the final product.

2.2 Ice crystal dispersion (ICD)

For microscopy, phase A or the final aerated ice-containing product is dispersed in paraffin oil and imaged using an Olympus microscope, which has been installed into a freezer and equilibrated at -10°C.

After equilibration of the sample and the paraffin oil at -18°C, an aliquot (5 g) of the product is mixed with an equivalent volume of paraffin oil, thereby obtaining dispersion 1. After one hour, the dispersion is transferred into a glove box. About 2cm of dispersion are sampled with a spatula, spread onto a 46x76x1 mm glass slide, covered with a drop of paraffin oil, covered with a 46x76x1 mm glass side and spread using a 1 kg weight.

2.2 Cryo-substitution (CS)

The CS technique allows the observation of ice particle shape, air and matrix structures in the final aerated ice-containing product. Therefore, 4 $\mu$m thin resin sections of the product are prepared as follows:

1. For cryo-fixation, about 2 mm thick handmade sections of the aerated ice-containing product are immersed in a mixture of 3 parts acetone and 1 part glacial acetic acid at -18°C for three days;
2. The sections are immersed in a mixture of acetone and Historesin (Kulzer) at -18°C for three days;
3. Sections are immersed in Historesin (Kulzer) at -18 °C for another three days;
4. Then sections are immersed in a mixture of acetone and Historesin (Kulzer) at -18 °C for one day;
5. Sections are then polymerized in Historesin at room temperature according to supplier's instructions;
6. Samples are thin-sectioned using an Ultracut microtome (Leica); sections are collected on water, collected on glass slides and allowed to dry.
7. Sections are observed either unstained or further to staining with, for example, toluidine blue, Nile blue, Nile red, etc. or further to a specific labeling (for example immunofluorescence, labeled lectins) under an Olympus microscope.

Detailed description of the invention

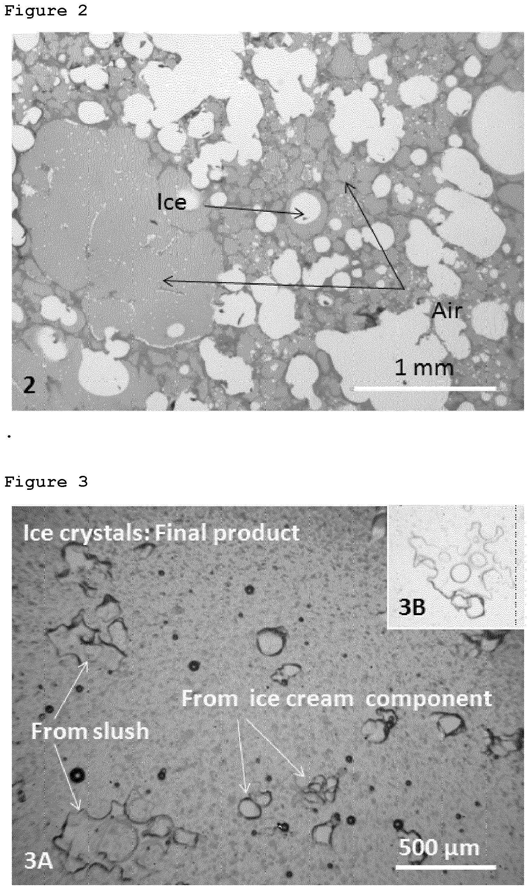

The aerated ice-containing products of the invention are characterized by a particular biphasic structure, which provides a very soft and smooth conception on the tongue, together with a rich cold and refreshing taste. Such aerated ice-containing products of the invention are obtainable by mixing in a weight ratio of from 3:7 to 1:1, and preferably of 3:2 a phase A comprising ice particles having frozen confection such as ice cream ingredients comprising at least 1, preferably at least 5 %weight MSNF and at least 1, preferably at least 3 %weight fat, and having at -18°C a mean particle size of 30$\mu$m to 60$\mu$m, preferably 40$\mu$m to 50$\mu$m, and a phase B comprising ice particles, which are grown from an aqueous sugar solution comprising less than 1%weight MSNF and less than 1%weight fat, and having at -18°C a mean particle size of between 100$\mu$m and 400$\mu$m, preferably 150$\mu$m and 300$\mu$m.
It is also preferred that after mixing phase A and phase B, the product is processed such that at least 80% of the ice particles of phase A are larger than 20$\mu$m and smaller than 250$\mu$m, preferably larger than 40$\mu$m and smaller than 150$\mu$m, and more preferably have a mean particle size of about 100$\mu$m and/or such that at least 80% of the ice particles of phase B are larger than 200$\mu$m and smaller than 1mm, preferably smaller than 800$\mu$m, and more preferably have a mean particle size of about 300$\mu$m. Further, aerated ice-containing products according to the invention may comprise at least a phase A comprising ice particles having frozen confection ingredients comprising at least 1, preferably at least 5 %weight MSNF and at least 1, preferably at least 3 %weight fat, wherein at least 80% of the ice particles of phase A are larger than 20$\mu$m and smaller than 250$\mu$m, preferably larger than 40$\mu$m and smaller than 150$\mu$m, and more preferably have a mean particle size of about 100$\mu$m, and a phase B comprising ice particles, which are grown from an aqueous sugar solution, preferably an aqueous sucrose solution, comprising less than 1%weight MSNF and less than 1%weight fat, wherein at least 80% of the ice particles of phase B are larger than 200$\mu$m and smaller than 1mm, preferably smaller than 800$\mu$m, and more preferably have a mean particle size of about 300$\mu$m.
The indicated particles sizes are determined by macroscopic imaging of phase B and microscopic imaging of phase A, respectively, and calculation of the equivalent circular diameter derived from the area of each particle, which method is generally known to the skilled person. Mean particle sizes are determined by identifying the size of at least 500 particles and averaging by number.
Concerning the aforementioned products, it is particularly preferred that at least 80%, preferably at least 90%, more preferably at least 95% and most preferably at least 99% of the ice particles in phase A are larger than 60$\mu$m and/or that at least 80%, preferably at least 90%, more preferably at least 95% and most preferably at least 99% of the ice particles in phase B are larger than 225$\mu$m. The ratio of the mean ice particle size in phase A to the mean ice particle size of phase B is preferred to be from about 1:10 to about 1:1, and more preferably from about 1:7 to 1:3.
Advantageously, the inventive products have an overrun of from 20% to 60%, preferably of from 30% to 40%.
The ice particles in phase A and/or in phase B are typically generated by crystal growth from a nucleation source such as an aqueous sugar solution. Sugars typically include monosaccharides, disaccharides, oligosachharides and mixtures thereof. Preferably the aqueous sugar solution is an aqueous sucrose solution, which preferably comprises at least 5% of sucrose. Unlike the large frozen particles comprised in ice-containing products of the aforementioned prior art, which are characterized by sharp angles and a polygonal appearance (e.g. EP 1 778 023, EP 1 051 913), the grown particles of the invention exhibit a spheroid or ellipsoidal shape with an exceptionally round and smooth surface. Such smooth surfaced particles have been visualized by the cryo-substitution technique as shown in Figure 2.

The specific spheroidal and/or ellispoidal microstructure of phases A and/or B has a direct impact on the texture and taste characteristics of the resulting product in terms of an advanced smoothness and softness.

Therefore, it is highly preferable that in both phases A and B, at least 80%, preferably at least 90%, more preferably at least 95% and most preferably at least 99% of the therein comprised ice particles are grown from sugar solution and therefore exhibit a spheroid or ellipsoidal shape.

In the final ice-containing product of the invention, the ice particles in phase B typically exhibit an ellipsoidal shape and have a flat and/or perforated appearance. This has been visualized by micro-imaging of phase B with the dispersion method (ICD), as displayed in Figure 3.

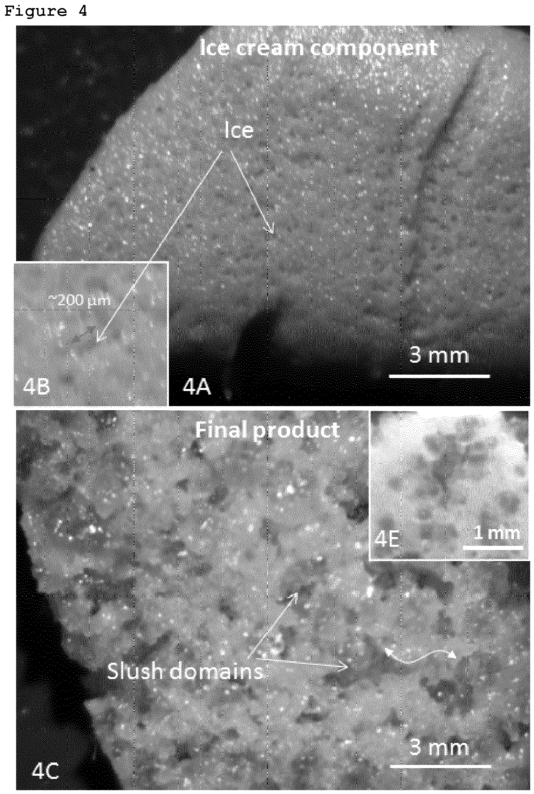

It is also typical for the final ice-containing product of the invention that phase A forms a continuous phase, with phase B homogenously dispersed therein. In the context of the present invention, the term "continuous phase" is to be understood as being that component in the heterogeneous system of phases A and B, in which the other component, i.e. phase B, is distributed. Phase A typically builds a matrix structure with uniformly scattered ice particles. Within said matrix, disperse phase B forms interconnected domains of irregular shapes. Said domains result from the aggregation of the ice particles of phase B, wherein these particles still retain their original spheroid and/or ellipsoid shape and are clearly identifiable as being generated by crystal growth (see Figure 4). Typically, the ice particles of phase A are smaller than the ice particles grown in phase B.

The aerated ice-containing product of the invention may be used to provide or may be a frozen confectionary product such as ice cream, mellorine, ice milk, milk shake, frozen custard, frozen yogurt, sherbet, etc.

Further, phase A may be composed of a frozen confectionary composition such as ice cream, mellorine, ice milk, milk shake, frozen custard, frozen yogurt, sherbet, etc. as well. These and further frozen confectionary compositions are commonly known in the art, e.g. from Ice Cream, fifth edition, Robert T. Marshall & W.S. Arbuckle (1996, 2000) Aspen Publishers, Inc., Gaithersburg, Maryland.

In case that phase A represents the continuous phase in the disperse biphasic system of the inventive product, its composition typically determines the type of the resulting frozen confectionary.

It is preferable that phase A is an ice cream composition. Said ice cream composition may comprise fat, preferably in an amount of 2-20%, more preferably of 5-10% per total weight of the ice cream composition, milk-solids-non-fat (MSNF), preferably in an amount of 1-30%, More preferably form 5-20% per total weight of the ice cream composition, sugar, preferably in an amount of 5-30% per total weight of the ice cream composition one or more stabilizer and/or emulsifier.

It is particularly preferred that phase A has an overrun of from 35 to 55%.

Phase B may be composed of a slush ice composition comprising water, preferably in an amount of 65-99%, more preferably of 80-95% per total weight of the slush ice composition, and sugar, preferably in an amount of from 1-35%, more preferably of 5-20% per total weight of the slush ice composition. Phase B may further comprise flavour and optionally one or more stabilizers preferably selected from guar gum and locust bean gum.

Further food components may be comprised in phase A such as fruit pieces, fruit juice, vegetable pieces, chocolate, couvertures, dairy products such as milk and yoghurt, confectionery pieces such as candy, marshmallow, fudge, or caramel and other edible inclusions.

Phase B may further comprise edible inclusions such as fruit pieces and/or fruit juice.

In accordance with the present invention, slush-ice particles grown from a sugar solution may be used to produce an aerated frozen dessert by mixing it with ice cream particles having a smaller mean particle size than the slush-ice particles.

The aerated ice-containing products as described above may be obtained by the following process, comprising the following steps.

At first, the two phases A and B are prepared separately.

Phase B may be obtained by preparing an ingredient mix comprising water and sugar. The mix is then cooled, preferably to about 0°C to about +10°C, more preferably to about +4°C, and subsequently stored in aging tank, preferably for about 4 to about 72 hours. Optionally, the phase B mix may be pre-cooled, preferably at a temperature between about 0°C and about +2°C, followed by freezing the mix, preferably until it reaches a temperature between about -0,5 °C and about -4°C.

Phase A may be prepared by preparing a frozen confection such as ice cream mix and cooling the mix, preferably to about 0°C to about 10°C, more preferably to about +4°C. Subsequently the mix is stored in an aging tank and frozen in a standard freezer, preferably at a temperature of from about -5°C to about -2°C, more preferably with an overrun of about 35 - 55%.

Phase B is then added in the tank used for preparing Phase A, gently stirred, continuously or alternated, preferably while controlling temperature and overrun, more preferably with an electrical absorption retrofitting and/or refrigerating system.

The obtained product is then pumped in a buffer tank, refrigerated and stirred at slight over-pressure. The final product is filled in a container, preferably using a volumetric displacement system. Optionally, a special nozzle may be used to obtain decoration. The final product is hardened, preferably in a tunnel, more preferably at about -45°C, most preferably such that the core temperature of the final product is about -18°C.

It is preferred that in the aforementioned process, phase B is a slush ice composition comprising from 80 to 95% water and from 5 to 20% sugar and phase A is an ice cream composition.

The present invention will now be further described by the following Examples, which are illustrative and not limiting.

## Examples and explanation of the figures

The figures show images from a product which has been prepared as follows:

(a) Preparing a slush ice (component B)

Cooling an ingredient mix comprising:

85 to 95 % water,
6 to 14% sugar,
flavour
stabilizer
Total Solids: 5-10%

The mix is prepared by blending raw material, pre-heated, pasteurized, homogenised, cooled to +4° and stored in an aging tank for minimum 4h and maximum 72h. Then the mix is pre-cooled at a temperature between $0° < x < +2°$ and subsequently cooled/frozen until it reaches a temperature between -0,5 °C and -4°C, depending on the recipe. Freezing is performed by continuously and slowly stirring and re-circulating inside the tank without pump and scraping at slight over-pressure ($CO_2$, $N_2$, dehumidified air).

b) Preparing an ice cream (component A)

Cooling an ice cream mix comprising

5 -10 % fat,
3- 5 % MSNF,
20 to 28 % sugar,
stabilizer
soluble flavour

The mix is prepared by blending raw material, pre-heated, pasteurized, homogenised, cooled to +4° and stored in an aging tank for minimum 4h and maximum 72h. Then the mix is frozen in a standard freezer at $-5°C < x < -2°C$ with an overrun of 35 - 55 %

c) Mixing:

Component B is added in the tank used for preparing A in the defined ratio (for example 30-70%, 40-60%, up to 50-50%) and gently stirred, continuously or alternated, (also on-off), while controlling temperature and overrun with an electrical absorption retrofitting and refrigerating system.

(c) Obtained product is pumped in a buffer tank, refrigerated, stirred, slightly over-pressured ($CO_2$, $N_2$, dehumidified air).

(d) A container is filled with the obtained product using a volumetric displacement system without pressure. A special nozzle may be used to obtain decoration.

(e) The finished product is hardened at -45°C in a tunnel. Core temperature of the finished product = -18°C

Results

Mixing ratio:

Component B (slush ice): 40% weight
Component A (ice cream): 60% weight

Total Solids (TS) in the end product:

23-26% weight

Overrun of the end product:

30-40% (Volume-Weight/Weight x100)

Figure 1 shows the macroscopy imaging setup. Reference 1 designates a freezing unit. Reference 2 designates an imagining device, such as e.g. an Infinity 2-1C camera (Lumenera, USA) having lenses, e.g. Objective Zoom 7000 (Navitar, Japan). The sample 5 to be analyzed is lit with illumination means 4, such as e.g. an Osram L22W/840C ring light, arranged essentially on the plane on which the sample is placed. The images are taken with the imaging device being arranged for a vertical view on the sample.

Figure 2 is a top (micro-imaging) view of ice particles in the final product when using the above-explained Cryo-substitution method. In both phases A and B ice particles display a spheroidal pattern due to their growing conditions. Generally, the grown ice particles according to the invention have more roundish contours when compared to ice particles produced according to the known diminishing (grinding) approach, which typically present sharper contours.

Figure 3 displays a micro-imaging of ice particles in the final product when using the above-explained dispersion method. A typical pattern of the slush particles ("component B") is shown, resulting from the technology used to create them: flat and perforated. These flat and perforated ice crystal are a typical result from the process according to the invention and can be found in the final product. Also we see the ice particles brought by the ice cream component, which have grown during the mixing process.

Figure 4A shows a macro-imaging of phase A.

Figure 4B shows a macro-imaging of the final product. In Figure 4A arrows point to icy structures corresponding to ice crystal aggregates. In Figure 4B arrows point to large icy domains. Many of these domains are connected (curved arrow).

Figure 4C shows that the ice domains of the final product result from the aggregation of the slush ice particles.

Therefore, due to the aggregation process, the mean particle size of both phases will increase during the processing following the mixing of the two phases, when compared to the mean particle sizes prior to the mixing.

**Claims**

1. An aerated ice-containing product, obtainable by mixing in a weight ratio of from 3:7 to 1:1, and preferably of 3:2:

    a.) a phase A comprising ice particles having frozen confection ingredients comprising at least 1, preferably at least 5 %weight milk solids-non-fat (MSNF) and at least 1, preferably at least 3 %weight fat, and having at -18°C a mean particle size of 30$\mu$m to 60$\mu$m, preferably 40$\mu$m to 50$\mu$m, and
    b.) a phase B comprising ice particles, which are grown from an aqueous sugar solution comprising less than 1%weight MSNF and less than 1%weight fat, and having at -18°C a mean particle size of between 100$\mu$m and 400$\mu$m, preferably 150$\mu$m and 300$\mu$m.

2. The product of claim 1, wherein after mixing phase A and phase B, the product is processed such that at least 80% of the ice particles of phase A are larger than 20$\mu$m and smaller than 250$\mu$m, preferably larger than 40$\mu$m and smaller than 150$\mu$m, and more preferably have a mean particle size of about 100$\mu$m.

3. The product of claim 1 or 2, wherein after mixing phase A and phase B, the product is processed such that at least 80% of the ice particles of phase B are larger than 200$\mu$m and smaller than 1mm, preferably smaller than 800$\mu$m, and more preferably have a mean particle size of about 300$\mu$m.

4. An aerated ice-containing product, comprising at least:

 - a phase A comprising ice particles having frozen confection ingredients comprising at least 1, preferably at least 5 %weight MSNF and at least 1, preferably at least 3 %weight fat,
 wherein at least 80% of the ice particles of phase A are larger than 20$\mu$m and smaller than 250$\mu$m, preferably larger than 40$\mu$m and smaller than 150$\mu$m, and more preferably have a mean particle size of about 100$\mu$m, and
 - a phase B comprising ice particles, which are grown from an aqueous sugar solution comprising less than 1%weight MSNF and less than 1%weight fat, wherein at least 80% of the ice particles of phase B are larger than 200$\mu$m and smaller than 1mm, preferably smaller than 800$\mu$m, and more preferably have a mean particle size of about 300$\mu$m.

5. Product according to any claim 2 or 4, wherein at least 80%, preferably at least 90%, more preferably at least 95% and most preferably at least 99% of the ice particles in phase A are larger than 60$\mu$m.

6. Product according to claim 3, 4 or 5, wherein at least 80%, preferably at least 90%, more preferably at least 95% and most preferably at least 99% of the ice particles in phase B are larger than 225$\mu$m.

7. Product according to any of claims 2 to 6, wherein the ratio of the mean ice particle size in phase A to the mean ice particle size of phase B is from about 1:10 to about 1:1, and preferably from about 1:7 to 1:3.

8. Product according to any of the preceding claims, having an overrun of from 20% to 60%, preferably of from 30% to 40%.

9. Product according to any of the preceding claims, wherein the ice particles in phase A and/or in phase B are generated by crystal growth from a nucleating source, preferably from an aqueous sugar solution.

10. Product according to any of the preceding claims, wherein at least 80%, preferably at least 90%, more preferably at least 95% and most preferably at least 99% the ice particles in phase A and/or in phase B exhibit a spheroid or ellipsoidal shape.

11. Product according to any of the preceding claims, wherein the ice particles in phase B comprises particles which have ellipsoidal shape and have a flat and perforated appearance when visualized under the microscope.

12. Product according to any of the preceding claims, wherein phase B is homogenously dispersed in a continuous phase A.

13. Product according to any of the preceding claims, wherein phase A is composed of a frozen confectionary composition such as ice cream, mellorine, ice milk, milk shake, frozen custard, frozen yogurt, sherbet, and preferably is an ice cream composition.

14. Product according to claim 13, wherein phase A has an overrun of from 35 to 55%.

15. Product according to any of the preceding claims, wherein phase B is composed of a slush ice composition comprising from 80 to 95% water and from 5 to 20% sugar.

16. Process for preparing a product, preferably a product according to any of the preceding claims, comprising the steps of

 (x) preparing phase B by a process involving the following steps:

 f. preparing an ingredient mix comprising water and sugar,

g. cooling the mix, preferably to a temperature of from about 0°C to about +10°C, more preferably to about +4°C,

h. storing the mix in aging tank, preferably for about 4 to about 72h,

i. pre-cooling the mix, preferably at a temperature comprised between about 0°C and about 2°C,

j. freezing the mix, preferably until it reaches a temperature of from about -0,5°C to about -4°C.

(xi) preparing phase A by a process involving the following steps:

b. preparing a frozen confection mix for phase A,

c. cooling the mix, preferably to a temperature of from 0°C to +10°C, more preferably to +4°C

e. storing the mix in an aging tank, preferably for about 4 to about 72h,

f. freezing the mix, preferably at about - 0,5°C to about -2°C, more preferably providing an overrun of from about 35 - 55%.

(xii) admixing phase A into phase B,

(xiii) gently stirring the mixture, preferably at controlled temperature and overrun,

(xiv) pumping the obtained product in a buffer tank

(xv) refrigerating and stirring the product, preferably under slight overpressure,

(xvi) filling product in a container, preferably using a volumetric displacement system,

(xvii) hardening the product, preferably in a tunnel, more preferably at about -45°C

(xviii) storing the product, preferably at a core temperature of about -18°C.

17. Process according to claim 16, wherein phase B is a slush ice composition comprising from 80 to 95% water and from 5 to 20% sugar and phase A is an ice cream composition.

18. Use of slush-ice particles, grown from a sugar solution, to produce an aerated frozen dessert, by mixing it with ice cream particles which a smaller mean particle size than the slush-ice particles.

Figure 1

Figure 2

.

Figure 3

Figure 4

Europäisches
Patentamt

European
Patent Office

Office européen
des brevets

## EUROPEAN SEARCH REPORT

Application Number

EP 12 15 4801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 189686 A (TAIYO KAGAKU KK) 12 July 1994 (1994-07-12) | 16,18 | INV. A23G9/48 |
| A | * the whole document * | 1,4 | A23G9/44 |
| X | JP 9 121778 A (MORINAGA & CO) 13 May 1997 (1997-05-13) * the whole document * | 1,4,16, 18 | |
| X | US 4 310 559 A (MITA KOU ET AL) 12 January 1982 (1982-01-12) * claims; example * | 18 | |
| X,D | US 4 031 262 A (NAKAYAMA MICHIO ET AL) 21 June 1977 (1977-06-21) * the whole document * | 16,18 | |
| X,D | WO 2006/007924 A1 (UNILEVER PLC [GB]; UNILEVER NV [NL]; LEVER HINDUSTAN LTD [IN]; ALDRED) 26 January 2006 (2006-01-26) * the whole document * | 16,18 | |
| X | WO 96/34537 A1 (UNILEVER PLC [GB]; UNILEVER NV [NL]) 7 November 1996 (1996-11-07) | 18 | TECHNICAL FIELDS SEARCHED (IPC) A23G |
| A | * claims; example 2 * | 1-17 | |
| X,D | EP 1 051 913 A2 (LOTTE CO LTD [JP]) 15 November 2000 (2000-11-15) | 18 | |
| A | * the whole document * | 1-17 | |
| X | WO 2011/051061 A1 (UNILEVER PLC [GB]; UNILEVER NV [NL]; UNILEVER HINDUSTAN [IN]; ALDRED A) 5 May 2011 (2011-05-05) * paragraph [0038]; claims; example 14 * | 18 | |
| X | JP 52 012958 A (NAKAYAMA MICHIO; NAKAYAMA SETSUKO) 31 January 1977 (1977-01-31) * the whole document * | 18 | |

-/--

The present search report has been drawn up for all claims

| Place of search | Date of completion of the search | Examiner |
|---|---|---|
| The Hague | 4 July 2012 | Boddaert, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

15

Europäisches
Patentamt

European
Patent Office

Office européen
des brevets

# EUROPEAN SEARCH REPORT

Application Number

EP 12 15 4801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 201 974 A2 (UNILEVER NV [NL]; UNILEVER PLC [GB]) 20 November 1986 (1986-11-20) * the whole document * | 1-18 | |
| A | EP 1 929 879 A1 (UNILEVER PLC [GB]; UNILEVER NV [NL]) 11 June 2008 (2008-06-11) * the whole document * | 1-18 | |
| A,D | US 4 988 529 A (NAKAYA TSUNEMOTO [JP] ET AL) 29 January 1991 (1991-01-29) * the whole document * | 1-18 | |
| A | WO 97/16980 A1 (UNILEVER PLC [GB]; UNILEVER NV [NL]) 15 May 1997 (1997-05-15) * examples * | 1-18 | |
| A | WO 2006/009748 A2 (DIPPIN DOTS INC [US]; ULRICH CONNIE D [US]; TIMMONS TOM [US]) 26 January 2006 (2006-01-26) * the whole document * | 1-18 | TECHNICAL FIELDS SEARCHED (IPC) |

The present search report has been drawn up for all claims

| Place of search | Date of completion of the search | Examiner |
|---|---|---|
| The Hague | 4 July 2012 | Boddaert, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 15 4801

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2012

| Patent document cited in search report | | Publication date | Patent family member(s) | | Publication date |
|---|---|---|---|---|---|
| JP 6189686 | A | 12-07-1994 | NONE | | |
| JP 9121778 | A | 13-05-1997 | NONE | | |
| US 4310559 | A | 12-01-1982 | DE | 2904632 A1 | 09-08-1979 |
| | | | FR | 2416649 A1 | 07-09-1979 |
| | | | IT | 1110395 B | 23-12-1985 |
| | | | JP | 1295662 C | 26-12-1985 |
| | | | JP | 54107563 A | 23-08-1979 |
| | | | JP | 60019976 B | 18-05-1985 |
| | | | US | 4310559 A | 12-01-1982 |
| US 4031262 | A | 21-06-1977 | NONE | | |
| WO 2006007924 | A1 | 26-01-2006 | AT | 521247 T | 15-09-2011 |
| | | | AU | 2005263383 A1 | 26-01-2006 |
| | | | BR | PI0513614 A | 13-05-2008 |
| | | | CA | 2574166 A1 | 26-01-2006 |
| | | | CN | 1988810 A | 27-06-2007 |
| | | | EP | 1778023 A1 | 02-05-2007 |
| | | | ES | 2371759 T3 | 09-01-2012 |
| | | | IL | 180384 A | 31-07-2011 |
| | | | US | 2007196538 A1 | 23-08-2007 |
| | | | WO | 2006007924 A1 | 26-01-2006 |
| | | | ZA | 200700566 A | 27-08-2008 |
| WO 9634537 | A1 | 07-11-1996 | AR | 001820 A1 | 10-12-1997 |
| | | | AT | 213910 T | 15-03-2002 |
| | | | AU | 699333 B2 | 03-12-1998 |
| | | | AU | 5688496 A | 21-11-1996 |
| | | | BR | 9608166 A | 09-02-1999 |
| | | | CA | 2217498 A1 | 07-11-1996 |
| | | | CN | 1183030 A | 27-05-1998 |
| | | | CZ | 9703474 A3 | 13-05-1998 |
| | | | DE | 69619696 D1 | 11-04-2002 |
| | | | DE | 69619696 T2 | 12-09-2002 |
| | | | DK | 871369 T3 | 27-05-2002 |
| | | | EP | 0871369 A1 | 21-10-1998 |
| | | | ES | 2172658 T3 | 01-10-2002 |
| | | | HU | 0002158 A2 | 28-10-2000 |
| | | | IL | 117905 A | 30-11-1999 |
| | | | JP | H11504806 A | 11-05-1999 |
| | | | NO | 975034 A | 31-10-1997 |
| | | | NZ | 307515 A | 25-02-1999 |
| | | | PL | 323238 A1 | 16-03-1998 |
| | | | PT | 871369 E | 30-08-2002 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 12 15 4801

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2012

| Patent document cited in search report | | Publication date | Patent family member(s) | | Publication date |
|---|---|---|---|---|---|
| | | | SK | 146397 A3 | 04-03-1998 |
| | | | TR | 9701279 T1 | 22-06-1998 |
| | | | US | 5738889 A | 14-04-1998 |
| | | | WO | 9634537 A1 | 07-11-1996 |
| | | | ZA | 9603225 A | 23-10-1997 |
| EP 1051913 | A2 | 15-11-2000 | CN | 1276167 A | 13-12-2000 |
| | | | DE | 60036322 T2 | 05-06-2008 |
| | | | EP | 1051913 A2 | 15-11-2000 |
| | | | ES | 2289983 T3 | 16-02-2008 |
| | | | HK | 1032720 A1 | 02-07-2004 |
| | | | ID | 30185 A | 15-11-2001 |
| | | | IN | 187990 A1 | 03-08-2002 |
| | | | JP | 3660157 B2 | 15-06-2005 |
| | | | JP | 2000316481 A | 21-11-2000 |
| | | | KR | 20000075383 A | 15-12-2000 |
| | | | TW | 433985 B | 16-05-2001 |
| WO 2011051061 | A1 | 05-05-2011 | CA | 2778321 A1 | 05-05-2011 |
| | | | WO | 2011051061 A1 | 05-05-2011 |
| JP 52012958 | A | 31-01-1977 | NONE | | |
| EP 0201974 | A2 | 20-11-1986 | DE | 3673061 D1 | 06-09-1990 |
| | | | DK | 216786 A | 11-11-1986 |
| | | | EP | 0201974 A2 | 20-11-1986 |
| | | | US | 4737372 A | 12-04-1988 |
| EP 1929879 | A1 | 11-06-2008 | NONE | | |
| US 4988529 | A | 29-01-1991 | NONE | | |
| WO 9716980 | A1 | 15-05-1997 | AT | 205054 T | 15-09-2001 |
| | | | AU | 703941 B2 | 01-04-1999 |
| | | | BR | 9611392 A | 13-07-1999 |
| | | | CA | 2236676 A1 | 15-05-1997 |
| | | | CN | 1201371 A | 09-12-1998 |
| | | | CZ | 9801388 A3 | 12-08-1998 |
| | | | DE | 69615047 D1 | 11-10-2001 |
| | | | DE | 69615047 T2 | 06-06-2002 |
| | | | EP | 0863711 A1 | 16-09-1998 |
| | | | ES | 2163044 T3 | 16-01-2002 |
| | | | HU | 9903350 A2 | 28-07-2000 |
| | | | IL | 123415 A | 30-04-2001 |
| | | | JP | 4169165 B2 | 22-10-2008 |
| | | | JP | H11514529 A | 14-12-1999 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 12 15 4801

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2012

| Patent document cited in search report | | Publication date | Patent family member(s) | | Publication date |
|---|---|---|---|---|---|
| | | | NZ | 320205 A | 29-06-1999 |
| | | | PL | 326656 A1 | 12-10-1998 |
| | | | SK | 58098 A3 | 09-09-1998 |
| | | | TR | 9800807 T2 | 21-07-1998 |
| | | | US | 5698247 A | 16-12-1997 |
| | | | WO | 9716980 A1 | 15-05-1997 |
| | | | ZA | 9609125 A | 30-04-1998 |
| WO 2006009748 | A2 | 26-01-2006 | AU | 2005265010 A1 | 26-01-2006 |
| | | | BR | PI0512264 A | 26-02-2008 |
| | | | CA | 2570776 A1 | 26-01-2006 |
| | | | CN | 1968630 A | 23-05-2007 |
| | | | EP | 1758488 A2 | 07-03-2007 |
| | | | JP | 2008503235 A | 07-02-2008 |
| | | | US | 2006102016 A1 | 18-05-2006 |
| | | | WO | 2006009748 A2 | 26-01-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4988529 A
- US 4031262 A
- EP 1051913 A
- EP 1778023 A

**Non-patent literature cited in the description**

- **ROBERT T. MARSHALL ; W.S. ARBUCKLE.** Ice Cream. Aspen Publishers, Inc, 1996
- **ROBERT T. MARSHALL ; W.S. ARBUCKLE.** Ice Cream. Aspen Publishers, Inc, 1996, 265